# NEW EUROPEAN PATENT SPECIFICATION

(11) **EP 1 751 231 B2**
(45) Date of publication and mention of the opposition decision: **23.12.2015**
(45) Mention of the grant of the patent: 27.04.2011
(21) Application number: 05755030.3
(22) Date of filing: 24.05.2005
(51) Int. Cl.: C08L 23/08, C08L 23/10, C08J 5/18, B32B 27/32, B32B 7/12

(54) **POLYMER BLENDS FOR PEELABLE AND/OR PERMANENT SEALS**
POLYMERMISCHUNGEN FÜR ABZIEHBARE UND/ODER PERMANENTE DICHTUNGEN
MELANGES POLYMERES POUR OPERCULES PELABLES ET/OU PERMANENTS

(30) Priority: 24.05.2004 US 573874 P
(43) Date of publication of application: 14.02.2007
(73) Proprietor: E. I. du Pont de Nemours and Company, Wilmington, DE 19898 (US)
(72) Inventor: LEE, I-Hwa, Wilmington, Delaware 19802 (US); HAUSMANN, Karlheinz, CH-2012 AUvernier (CH)
(74) Representative: Heinemann, Monica
(86) International application number: PCT/US2005/018415
(87) International publication number: WO 2005/116132

(56) References cited:
- EP-A- 0 293 074
- EP-A1- 0 196 727
- EP-B1- 0 753 403
- WO-A-97/28960
- WO-A-03/093364
- WO-A2-01/70877
- WO-A2-2004/058594
- US-A- 4 539 263
- US-A- 4 870 134
- US-A- 5 277 988
- US-A- 5 462 807
- US-A1- 2004 006 180
- US-A1- 2005 159 549
- US-B1- 6 689 483
- Product Safety Assessment AFFINITY Polyolefin Plastomers-October 13, 2010
- DAVIS DONNA S.: 'Ethylene Incorporation in Polypropylene: Effect on Thermal-related properties' POLYMERS, LAMINATIONS & COATINGS CONFERENCE 1991, pages 345 - 348
- JACKSON J.F.: 'Crystallinity in Ethylene-Propylene Copolymers' JOURNAL OF POLYMER SCIENCE vol. 1, 1963, pages 211 - 2126

## Description

The invention relates to a composition that can be used to form seals in packages or as sealants for peelably and/or permanently sealed packages.

### BACKGROUND OF THE INVENTION

A number of packaging applications can benefit from a package in which a portion of the package seal area can be easily opened, and another portion is more permanently sealed for package integrity. Such a package can find use, for example, when the size of an opening in a package is limited, as for convenient pouring of the package contents. Such a package can also find use in applications for which two different materials are kept separate, as for stability, and the materials need to be mixed in pre-measured quantities, or at a specific time.

It is well known to seal packages with polymeric resins. Certain types of resin-sealed packaging that may be opened by the application of a relatively small force are described as "peelably sealed" or "frangibly sealed". There are many resins available in the marketplace to produce peelable seals. In general, however, these resins are incapable of producing more permanent seals, that is, seals that can be opened by application of a relatively large force, or that open by rupturing the packaging substrate with a relatively large force. There are also many permanent sealant resins available in the market place. However, these resins are incapable of producing peelable or frangible seals. Again, some other mechanical measures, such as perforations, are usually applied during the package production to make these seals weaker.

Peelable sealants are formed from blends of immiscible polymers, such as polyethylene and polybutylene, to introduce a molecular incompatibility into the sealant layer. It is believed that the molecular incompatibility creates discontinuities that reduce the force necessary to rupture the seal. The discontinuities are also believed to ensure that the package-opening rupture occurs within the sealant layer. Ruptures that occur within the packaging material, or at the interface between the sealant layer and the packaging material, are less controllable and, therefore, less desirable. The discontinuities often take the form of a dispersed phase of one polymer blended into a continuous phase of another polymer.

A tie layer having relatively low peel strength can be disposed between the sealant layer and the packaging film. The tie layer can be peelably bonded to the sealant layer and include blends of immiscible polymers. Peel failure occurs between the inner sealant layer and the tie layer, where the bond strength is weakest. Generally a force of between about 600 and about 1200 grams per inch width achieves peel failure. See, e.g., US patents RE 37,171 and 4,944,409.

The optimal seal performance for a peelable seal may depend on the specific application. A favored peelable sealant can be characterized by the following properties: it forms seals that are easily openable, that is, it has a peel strength within the desired range of force/distance; it forms seals that have a consistent and reproducible seal strength, that is, its seal strength does not change significantly across the heat sealing window; and the initiation peel force of the seals it forms is similar to the seal strength required for peelability.

Relatively low seal initiation temperatures, whether for a peelable or permanent seal, are also generally considered among the desirable properties of a favored sealant composition. Low seal temperatures lead to improved productivity on packaging machinery by allowing higher throughput and by lowering energy costs.

It is well known in the art to match the rheological properties of immiscible polymers in a peelable sealant in order to obtain optimal seal performance. See, e.g., US patent 6,590,034; De Clippeleir et al., "Rheology/Morphology/Performance Relationships for Peelable Films Based on PB/PE Blends," the SPE Polyolefin RETEC Conference, 1997, Houston, TX; and De Clippeleir, "PE/PB Blends for Film Applications," Specialty Plastic Films '97, Zurich, Switzerland.

Ionomer blends may produce peelable or frangible and lock-up seals, depending on the heat seal temperature used to form the package. *See, e.g.*, US Patents 4,539,263 and 4,550,141. Surlyn^{®} AD8273, available from E. I. du Pont de Nemours and Company (DuPont) of Wilmington, DE, is an example of a commercially available ionomer.

Ionomers used as packaging sealants may form static charge buildup when packaging dry goods such as powders or fine particulates thereby causing particulate contents to cling to the seal area, both before and after the seal is ruptured. This contamination of the seal area by statically attracted particles can reduce the reliability of the sealing process and the integrity of the seal. In addition, contamination of the seal with statically attracted particles is aesthetically unpleasing and may interfere with applications desiring an accurate delivery of pre-measured package contents.

Therefore, a need exists for sealant compositions that can provide both peelable and lock up seals between packaging materials, generate lower static charge buildup than an ionomer sealant, and exhibit relatively low seal initiation temperatures.

### SUMMARY OF THE INVENTION

The invention includes a polymer composition consisting essentially of a thermoplastic polymer blend and optional additives selected from antioxidants, slip agents, antiblocking agents, antifogging agents and antistats,
wherein the thermoplastic polymer blend consists essentially of an ethylene copolymer which is not an ionomer and a propylene polymer, wherein the ethylene copolymer comprises (1) repeat units derived from ethylene and alkyl acrylate, acrylic acid, methacrylic acid, or combinations of two or more thereof, and optionally carbon monoxide or an epoxy-containing comonomer, (2) a metallocene-catalyzed ethylene polymer comprising repeat units derived from ethylene and a second α-olefin, or (3) combinations of (1) and (2); and the propylene polymer comprises repeat units derived from propylene and optionally a comonomer, which is an α-olefin including ethylene, butene, or combinations thereof,
wherein the ethylene copolymer is present in the composition from about 70 wt% to about 95 wt% and the propylene polymer is present in the composition from about 5 wt% to about 30 wt%, wherein the additives are included in the composition in an amount of up to 10 wt%,
and wherein the composition forms a peelable seal when heated at a first temperature that is within the range of 80 to 160°C; and the composition forms a permanent or lock up seal when heated at a second temperature that is within the range of 100 to 180°C; with the range of temperatures regarding the first temperature spanning at least about 15°C.

The ethylene copolymer is present in an amount of from about 70 wt% to about 95 wt%, and the propylene polymer or polymers are present in an amount of from about 5 wt% to about 30 wt%. The polymer composition can form a peelable seal when heated at relatively low temperatures and a permanent seal when heated at relatively high temperatures.

The invention also includes a multilayer film comprising or produced from polymers where the film can optionally be laminated to an oriented film(s); the sealant can be the same composition as disclosed above; the sealant is preferably frangible and static-free.

The invention also includes a package comprising or produced from the multilayer film where the package comprises at least one frangible seal comprising or produced from a composition disclosed above.

The invention further includes a package comprising at least two compartments, which optionally contain or enclose at least two different materials where the compartments are separated by frangible or peelable seals such that the package may be opened internally to mix the individual materials within the package before discharging them.

The invention also includes a process comprising coextruding polymers to produce a multi-layer film containing a layer of the sealant to produce a sealant-containing film; optionally applying the sealant-containing film to a second film of oriented polyester or oriented polypropylene to produce a second multilayer film wherein the multi-layer film or the second multilayer film comprises the composition as disclosed above; (1) folding the multilayer film or the second multilayer film and sealing two sides of the film at the edges to produce a package having an opening thereby producing a seal and defining a sealed perimeter of a package with an opening, or superimposing two sheets of the multilayer film or the second multilayer film and sealing three sides at the edges of the multilayer film or the second multilayer film to produce a package having an opening thereby producing a seal and defining a sealed perimeter of a package with an opening, or superimposing the multilayer film or the second multilayer film with another film and sealing three sides at the edges of the multilayer film or the second multilayer film to produce a package having an opening thereby producing a seal and defining a sealed perimeter of a package with the opening; (2) optionally sealing one or more portions of the film internal to the perimeter of the package thereby producing one or more peelable seals forming a boundary and dividing the package into separate compartments; (3) confining one or more ingredients into one or more compartments and the ingredients includes solid, fluid, or gas and (4) sealing the opening;

### DETAILED DESCRIPTION OF THE INVENTION

The term "peelable seal" refers to seals that can be separated by peeling with a force of less than about 15 or about 10 N/15mm. The term "frangible" is interchangeable with "peelable". The term "permanent seal" refers to seals that rupture by peeling with a force of more than about 10 or about 15 N/15mm. The mechanism of the rupture may be through the cohesive or adhesive failure of the sealant, or of one or more layers adjoining the sealant; or through tearing the sealed substrate; or by a combination of these mechanisms. The term "lock-up seal" is interchangeable with "permanent seal".

The term "ethylene polymer", as used herein, refers to any polymer comprising greater than 50 mole % of -CH₂CH₂- repeat units derived from an ethylene monomer or comonomer while "propylene polymer" refers to any polymer comprising greater than 50 mole % of -CH₂CH₂(CH₃)- repeat units derived from a propylene monomer or comonomer. The term "finite amount" refers to an amount that is not equal to zero.

Ethylene polymers can include any ethylene-containing polymers within the definition set forth above, whether homopolymers or copolymers. Examples include, but are not limited to, ethylene homopolymers and ethylene interpolymers, such as low density polyethylene (LDPE), heterogeneously branched ethylene/α-olefin interpolymer (e.g., linear low density polyethylene (LLDPE), ultra low density polyethylene (ULDPE)), substantially linear ethylene polymers (SLEP), and homogeneously branched ethylene polymers.

Unsaturated comonomers useful for polymerizing with ethylene to form ethylene polymers include, for example, ethylenically unsaturated monomers, conjugated or non-conjugated dienes, polyenes, and the like. Examples of comonomers include, without limitation, α,β ethylenically unsaturated carboxylic acids, preferably C₃ to C₈ α,β ethylenically unsaturated carboxylic acids; ester derivatives of α,β ethylenically unsaturated carboxylic acids, such as straight-chained or branched C₃ to C₂₀ alkyl esters or C₁ to C₈ straight-chained or branched alkyl esters.

Further examples of comonomers include, without limitations, straight-chained or branched C₃ to C₂₀ α-olefins such as propylene, isobutylene, 1-butene, 1-hexene, 1-pentene, 4-methyl-1-pentene, 1-heptene, 1-octene, 1-nonene, 1-decene, styrene, halo- or alkylsubstituted styrenes, tetrafluoroethylene, vinylbenzocyclobutane, 1,4-hexadiene, 1,7-octadiene; and cycloalkenes, e.g., cyclopentene, cyclohexene and cyclooctene; vinyl acetate; combinations of two or more thereof; and the like.

Ethylene copolymer used herein refers to that comprising repeat units derived from ethylene and an unsaturated carboxylic acid or ester thereof such as (meth)acrylic acid or C₁ to C₈ alkyl (meth)acrylate, or combinations of two or more thereof. The term "(meth)acrylic" or "(meth)acrylate", refers to acrylic and/or methacrylic (e.g., acrylic acid and/or methacrylic acid) or alkyl acrylate and/or alkyl methacrylate.

Examples of alkyl acrylates include methyl acrylate, ethyl acrylate and butyl acrylate. For example, "ethylene/methyl acrylate (EMA)" means a copolymer of ethylene and methyl acrylate (MA); "ethylene/ethyl acrylate (EEA)" means a copolymer of ethylene and ethyl acrylate (EA); "ethylene/butyl acrylate (EBA)" means a copolymer of ethylene and butyl acrylate (BA); and includes both n-butyl acrylate and iso-butyl acrylate; and combinations of two or more thereof. Examples of unsaturated carboxylic acids include acrylic acid and methacylic acid. For example, "ethylene methacrylic acid (EMAA)" means a copolymer of ethylene (E) and methacrylic acid (MAA); "ethylene acrylic acid (EAA)" means a copolymer of ethylene and acrylic acid (EAA). Examples of more than one comonomer are also included. For example "ethylene/isobutyl acrylate methacrylic acid (E/iBA/MAA)" means a terpolymer of ethylene (E), iso-butyl acrylate (iBA) and methacrylic acid (MAA).

Alkyl (meth)acrylic acid or alkyl (meth)acrylate comonomer incorporated into ethylene copolymer can vary from 0.01 or 5 up to as high as 40 weight % of the total copolymer or even higher such as from 5 to 30, or 10 to 25, weight %.

Ethylene copolymer can also include another comonomer such as carbon monoxide, glycidyl acrylate, glycidyl methacrylate, and glycidyl vinyl ether, or combinations of two or more thereof.

Ethylene copolymers can be produced by processes well known in the polymer art using either autoclave or tubular reactors. The copolymerization can be run as a continuous process in an autoclave as disclosed in US Patents 3,264,272; 4,351,931; 4,248,990; and 5,028,674 and International Patent Application WO99/25742.

Because the processes are well known to one skilled in the art, the description of which is omitted herein for the interest of brevity. Several ethylene copolymers such as Elvaloy^{®} AC, Nucrel^{®}, and Bynel^{®} polymers are commercially available from DuPont.

Tubular reactor-produced ethylene copolymer can be distinguished from the more conventional autoclave produced ethylene copolymer as generally known in the art. Thus the term "tubular reactor produced" ethylene copolymer denotes an ethylene copolymer produced at high pressure and elevated temperature in a tubular reactor or the like, wherein the inherent consequences of dissimilar reaction kinetics for the respective ethylene and alkyl acrylate comonomers is alleviated or partially compensated by the intentional introduction of the monomers along the reaction flow path within the tubular reactor. Tubular reactor-produced ethylene copolymers are well known to one skilled in the art such as disclosed in US Patents 3,350,372; 3,756,996; and 5,532,066; the description of which is omitted herein for the interest of brevity. Tubular reactor-produced ethylene/alkyl acrylate copolymers are generally stiffer and more elastic than autoclave produced ethylene copolymers and are commercially available from DuPont.

The ethylene copolymer useful in the invention can vary in molecular weight as witnessed by melt index numerically in terms of a fraction up to about 10 such as about 4.3 - about 8 g/10 min.

The ethylene copolymer can also comprise metallocene-catalyzed ethylene α-olefin copolymers where polymerization occurs using metallocene or single-site catalysts to produce more uniformly linear polyethylene from the perspective of comonomer insertion and more narrowly distributed molecular weight distributions than Ziegler-Natta polyethylenes. The alpha-olefin comonomers are commonly butene, hexene and octene. The ethylene compositions may optionally further comprise additives such as thermal and ultraviolet (UV) stabilizers, UV absorbers, antistatic agents, processing aids, fluorescent whitening agents, pigments, lubricants, etc. These conventional ingredients may be present in the compositions used in this invention in quantities that are generally from 0.01 to 20, or 0.1 to 15, weight %.

The propylene polymer can comprise from about 5 to about 30, or 5 to 25, or 10 to 20, weight % of the composition.

Polypropylene (PP) polymers include homopolymers, random copolymers, block copolymers arid terpolymers of propylene, crystalline or amorphous; atactic, syndiotatic, or isotactic; or may be characterized by a combination of one or more of these properties. Copolymers or terpolymers of propylene include copolymers of propylene with other olefins such as ethylene, 1-butene, 2-butene and the various pentene isomers, 1-hexene, 1-octene, 1-nonene, 1-decene, 1-unidecene, 1-dodecene, 4-methyl-1-pentene, 4-methyl-1-hexene, 5-methyl-1-hexene, vinylcyclohexene, styrene, and the like. Random copolymers, also known as statistical copolymers, are polymers in which the propylene and the comonomer(s) are randomly distributed throughout the polymeric chain in ratios corresponding to the feed ratio of the propylene to the comonomer(s). Block copolymers are made up of chain segments consisting of propylene homopolymer and of chain segments consisting of, for example, random copolymer of propylene and ethylene. The comonomer content of the propylene polymer can be less than about 35%, between about 0% to about 20%, or between about 0% to about 15% by weight. Polypropylene refers to any or all of the polymers comprising propylene described above.

Propylene polymer is commercially available such as Fina™ 8573 available from ATOFINA Chemicals of Feluy, Belgium and DS6D81 available from the Dow Chemical Company of Midland, MI.

The composition may be produced by combining 70% to about 95%, or about 90% to about 95%, of ethylene polymer or ethylene copolymer by weight with about 30% to about 5%, no more than about 15%, or about 5% to about 10%, by weight of propylene polymer.

The composition may be produced by any means known in the art. For example, the individual polymers can be mixed with each other in molten form, such as by melt blending in an extruder, or blended with each other in a high shear mixing device, such as a two-roll mill or a Banbury mixer. After mixing, the polyolefin or propylene polymer forms a discontinuous phase dispersed in a continuous ethylene polymer phase.

The polymer composition may also include up to about 10 weight % of antioxidants, slip agents, antiblocking agents, antifogging agents, antistats and other additives as are commonly used in polymeric compositions for heat sealable films and/or laminates. Suitable levels of these additives and methods of incorporating additives into polymer compositions are known to those of skill in the art. See, e.g., "Fatty Amides" by Arthur L McKenna, Witco Chemical Corp. 1982, or "Modem Plastics Encyclopedia", McGraw-Hill, New York, NY 1995.

After mixing, the polymer composition may be shaped by melt extrusion, flat die extrusion, blown film extrusion or any other technique that produces the desired shape.

The polymer composition disclosed herein can produce seals that are peelable and/or permanent. The composition exhibits a temperature range for forming a peelable seal that is relatively lower than the temperature range at which they form a lock up seal. To form a peelable seal, the sealing temperature is about 80 to about 160 or about 90° to about 140°C.

The composition exhibits a temperature range for forming a permanent seal that is relatively higher than the range at which it forms a peelable seal. To form a permanent seal, the sealing temperature is higher than about 100 to about 180 or about 130 to about 160°C.

Optimization of seal strength for a given sealant may depend on variables such as sealing temperature; the thickness and the thermal transfer coefficients of the film and sealant; the dwell time and sealing pressure; crystallinity of the sealant; and the like. A quantitative model illustrating the effect of several variables on seal strength is set forth in "Predicting the Heat Seal Performance of lonomer Films" by Barry A. Morris, presented at SPE ANTEC 2002, May, 2002, San Francisco, CA.

The approximate relative temperature ranges discloses herein for forming peelable and permanent seals may decrease in predictive value if any of the variables relevant to seal strength is varied so as to affect the interfacial surface temperature of the sealants at the moment of sealing. The sealing temperature ranges disclosed herein represent approximations and guidelines that are intended to be adjusted as appropriate to compensate for routine variations in the equipment used and other conditions of sealing, such as pressure, dwell time, etc. For instance, if the total film gauge is thicker than described in the examples, or the line speed of the sealing machine is increased, or the dwell time for the seal bars is shortened, then the seal temperatures could increase beyond the approximate ranges described for both frangible and lock up seals.

The polymer compositions may exhibit seal initiation temperatures that are lower than the seal initiation temperatures of polymeric sealants known in the art.

The polymer compositions or sealants disclosed herein may form peelable seals when heated at temperatures that span a wider range than the range of temperatures at which polymer sealants known in the art may be heated to form a peelable seal, while still being able to form lockup seals in yet another higher temperature range. The range of temperatures over which the polymer sealants may form peelable seals spans at least about 15°C, at least about 20°C, at least about 25°C, at least about 30°C, or at least about 35°C.

Films useful in the process can be made by any method known to those skilled in this art. The film and film structures can be typically cast, extruded, co-extruded, laminated and the like, including orientation (either uniaxially or biaxially) by various methodologies (e.g., blown film, mechanical stretching or the like). Various additives generally practiced in the art can be present in the respective film layers including the presence of tie layers and the like, provided their presence does not substantially alter the adhesive properties of the film or film structure. The additives can be antioxidants and thermal stabilizers, ultraviolet (UV) light stabilizers, pigments and dyes, fillers, delustrants, anti-slip agents, plasticizers, antiblock agents, other processing aids, and the like may be advantageously employed.

It is possible, for example, to manufacture a primary film by extruding compositions using so-called "blown film" or "flat die" methods. A blown film is prepared by extruding the polymeric composition through an annular die and expanding the resulting tubular film with an air current to provide a blown film. Cast flat films are prepared by extruding the composition through a flat die. The film leaving the die is cooled by at least one roll containing internally circulating fluid (a chill roll) or by a water bath to provide a cast film. A film useful in this invention would have a width, for example, of about 60 cm (two feet) to 300 cm (ten feet).

A film can be further oriented beyond the immediate quenching or casting of the film. The process comprises the steps of extruding a laminar flow of molten polymer, quenching the extrudate and orienting the quenched extrudate in at least one direction. "Quenched" as the term is used herein describes an extrudate that has been substantially cooled below its melting point in order to obtain a solid film material.

The film can be unoriented, oriented in a uniaxial direction (e.g. machine direction), or oriented in a biaxial direction (e.g. machine direction and transverse direction). The film can be biaxially oriented by drawing in "two mutually perpendicular directions in the plane of the film to achieve a satisfactory combination of mechanical and physical properties.

Orientation and stretching apparatus to uniaxially or biaxially stretch film are known in the art such as those disclosed in US Patents 3,278,663; 3,337,665; 3,456,044; 4,590,106; 4,760,116; 4,769,421; 4,797,235 and 4,886,634. Because the processes for making different films are well known to one skilled in the art, the description of which is omitted herein for the interest of brevity.

In one embodiment, the film is formed by an extrusion process that causes the polymer chains in the film to be generally aligned in the direction of extrusion. Linear polymers, after being highly oriented uniaxially possess considerable strength in the orientation direction, but less strength in the transverse direction. This alignment can add strength to the film in the direction of extrusion.

The films may be treated by means of corona discharge, ozone or other means standard in the industry. The adhesion of multilayer structure can be improved by increasing the thickness of the ethylene copolymer layer. The thickness of the ethylene copolymer layer can be about 10 to about 40 µ (0.4 mil to 1.6 mil), or about 15 to about 30 µ (0.6 to 1.2 mil) thick.

The invention provides a multilayer structure comprising or produced from (a) at least one layer of polyolefin; (b) optionally at least one layer of a gas barrier polymer such as ethylene vinyl alcohol or polyamide; (c) optionally at least one anhydride-modified polyolefin adhesive; and (c) at least one sealant layer. The sealant layer can comprise or be produced from an ethylene copolymer. The ethylene copolymer can be the same as disclosed above. Polyolefins can include polypropylene or polyethylene polymers and copolymers comprising ethylene or propylene. Polyethylenes (PE) can be produced by well-known methods including well-known Ziegler-Natta catalyst polymerization (*see, e.g.,* US Patents 4,076,698 and 3,645,992), metallocene catalyst polymerization (see, e.g., US Patents 5,198,401 and 5,405,922) and by free radical polymerization. Polyethylene polymers can include HDPE, LLDPE, very low or ultra low density polyethylenes (VLDPE or ULDPE), and LDPE. The densities of polyethylenes range from 0.865 g/cc to 0.970 g/cc.

Polyethylene copolymers may include in addition to the ethylene copolymers previously described, other ethylene copolymers such as ethylene vinyl acetate and ethylene acid ionomers.

The invention further comprises laminating a multilayer film onto a substrate. The substrate can be metal, glass, ceramic tile, brick, concrete, wood, masonry, fiber, leather, film, plastics, stone, foil, paper, or webs such as organic polymers, metal foils, bleached and unbleached papers and board, glassine, non-woven fabrics, and composites of such materials.

For example, the multilayer film can be adhered to a substrate comprising a thermoplastic film (e.g., a polyolefin, polyester, nylon, or polyethylene vinyl alcohol), paper or paperboard. Further, for example, the thermoplastic film can be oriented or unoriented as disclosed above (e.g., oriented polyethylene terephthalate or OPET). Oriented films may be printed with images or color before lamination of extruded or coextruded films containing a sealants disclosed above.

The multilayer films can be useful in packaging applications as packaging materials that, for example, includes both frangible and permanent seals or as industrial films (e.g., as a structural component in insulation sheeting). Also, for example, the multilayer film can be applied to another packaging film such as an oriented film disclosed above to produce a second multilayer film. The multilayer film or the second multilayer film can be sealed to itself or to another film or to each other at a first, lower temperature to form a frangible seal. The multilayer film or the second multilayer film can also be sealed to itself or to another film or to each other at a second, higher temperature to form a permanent seal.

The first and second packaging substrates may be the same or different. For example, the first and second films may be first and second portions of a unitary film. In addition, the another film(s) may be the same or different from each other, and they may also be the same or different "from the first and second film. For example, the another film(s) may also be first and second portions of a unitary film.

The packages that include a permanent and a frangible seal are useful, for example, to form an easily peelable opening of well-defined size, while the remainder of the package retains its integrity. An opening of well-defined size can promote easy pouring of the package contents. In this embodiment, the frangible seal forms at least a portion of a boundary between the inside of the package and the outside of the package. A permanent seal, a fold of packaging material, or the like, may form the remainder of the boundary. In this manner, the size of the opening in the package is defined by the portion of the package's perimeter that is peelably sealed.

For example, polymers can be coextruded to produce a multilayer film containing a layer of the sealant to produce a sealant-containing film. The sealant-containing film can be applied or laminated to a second film of oriented polyester or oriented polypropylene to produce a second multilayer film. The multilayer film (or the second multilayer film) can comprise an ethylene copolymer disclosed above. After folding, two sides of each of the multilayer film or the second multilayer film can be sealed at their edges to produce a package having an opening. A sealed perimeter of a package is produced and defined. A multilayer film (or the second multilayer film) can also be or superimposed on another sheet of the same film followed by sealing three sides at the edges to produce a package having an opening thereby producing a seal and defining a sealed perimeter of a package. Alternatively, the multilayer film (or the second multilayer film) can be superimposed on another film such as a polyester film. The edges along three sides of the multilayer film are sealed to produce a package having an opening thereby producing a seal and defining a sealed perimeter of a package with the opening. One or more portions of the film(s) internal to the perimeter of the package can be sealed to produce one or more peelable or at least partially peelable seals to form a boundary and dividing the package into separate compartments. Each of the compartments can be filled with one or more ingredients including solid, fluid, or gas ingredient. The opening(s) can then be sealed. The perimeter seals of the package may be at least partially permanent, and the seals between the compartments may be at least partially frangible. Such packages may be useful for more conveniently mixing the contents of the compartments, such as when the contents of the compartments are pre-measured. Further, the packages can be used when the contents of the compartments are desirably mixed immediately before use, e.g., when the contents of the compartments are relatively more stable, when separated, than is a mixture of the contents. In addition, packages may be useful to contain a wet material in one compartment and a dry material in a second compartment.

The packaging materials may also be processed further by, for example but not limitation, printing, embossing, and/or coloring to provide a packaging material to provide information to the consumer about the product therein and/or to provide a pleasing appearance of the package. Such further processing is typically carried out before the lamination process described above, but may also be carried out after the lamination.

The packaging materials may be formed into packages, such as pouches, by standard methods well known in the art and the description is omitted herein for the interest of brevity.

The following examples are illustrative and are not to limit the invention.

### EXAMPLES

The sealant compositions in the following examples were prepared by blending the dry ingredients together, and subsequently melt blending them in a twin-screw 30 mm Werner & Pfleiderer™ extruder. Melt temperatures were in the range of 235° to 240°C.

### Examples 1-4

The sealant compositions were co-extruded with a tie adhesive, Bynel^{®} 41 E687, an anhydride modified polyethylene adhesive with 1.7 melt index, and a layer of ethylene/vinyl alcohol (EVOH), Eval F101A. The sealant was melted at 196°C in a 25-mm single screw extruder with 30:1 UD operating at 50 rpm. The adhesive was melted at 205°C in a 25-mm "single screw extruder with 24:1 L/D operating at 15 rpm. The EVOH was melted at 215°C in a 25-mm single screw extruder with 24:1 L/D operating at 43 rpm.

All three melt streams were fed through a Brampton^{™} co-extrusion blown film die so as to form a three layer film with the sealant at a nominal 25 µm, the adhesive layer at a nominal 13 µm and the EVOH layer at a nominal 25 µm. The die temperature was 215°C. The blow-up ratio of the blown film, defined as the stabilized film bubble diameter divided by the diameter of the die opening, was 2.1. The die gap was set at 1.02 mm. The film was run at 4.6 m/minute through the take-up rolls.

The structure of the finished films was as follows:
Sealant (25µm)/Bynel^{®} 41 E687 (13µm)/Evalt™ LCF101A (25µm)
where
BYNEL^{®} 41 E687 was available from DuPont. Eval™ LCF101A was available from the Eval Company of America of Houston, TX.

Strips of the finished films, 15mm wide, were cut in the machine direction. The 15mm strips were self-sealed on a Sentinel™ 1671 heat sealer at a pressure of 40 psi and a dwell time of 0.5 sec. The strips were sealed at different temperatures ranging from 100°C to 150°C. For each temperature 5 strips were sealed and 5 measurements were taken. Thus, the seal strengths reported herein represent the average of five measurements.

The strips were conditioned for 24h at 23°C and 50% relative humidity before their seal strength was determined. The seal strength was measured with a Zwick #2537 tensile tester, available from Zwick USA LP of Atlanta, GA, at a crosshead speed of 100mm/min.

The sealant compositions are set forth in Table I, below.

**Table 1. Sealant Compositions**

| Example No. | Ethylene polymer 1 | | Ethylene polymer 2 | | Propylene polymer | |
|---|---|---|---|---|---|---|
| | Wt % | Composition¹ | Wt % | Composition¹ | Wt % | Composition² |
| Comparative³ | | | | | | |
| 1 | 50 | MAA⁴ 11.5% | 45 | 10% iBA⁵+10% MAA⁴ | 5 | Ethylene 6% |
| 2 | 90 | octene 15-20% | 0 | | 10 | Ethylene 6% |
| 3 | 95 | MA⁶ 9% | 0 | | 5 | Ethylene 6% |
| 4 | 90 | BA⁷ 17% | 0 | | 10 | Ethylene 6% |

| | | | | | | |
|---|---|---|---|---|---|---|
| ¹ Remainder ethylene ² Remainder propylene ³ Surlyn^{®} AD8273 ⁴ Methacrylic acid ⁵ *iso*-Butyl acrylate ⁶ Methyl acrylate ⁷ n-Butyl acrylate | | | | | | |

The results of the seal strength measurements are shown in Table 2 below. The data demonstrate that, for the polymer compositions of Examples 1, 3, and 4, peelable seals were produced when the seal temperature was between about 110°C and about 130°C, whereas permanent seals were formed at seal temperatures above about 130°C to about 150°C. For the polymer composition of Example 2, a peelable seal was produced when the seal temperature was between about 110°C and about 120°C, whereas a permanent seal was formed at seal temperatures above about 125°C.

The data also show that the sealants of Examples 1-4 had lower seal initiation temperatures than the sealant of the comparative example.

The sealants of Examples 1-4 tended to form seals with strengths in the peelable range over a wider range of sealing temperatures, when other variables such as film thickness, sealing pressure, etc., were held approximately constant. For example, the sealant of Example 4 formed peelable seals at sealing temperatures between about 100°C and about 135 °C, thus providing a peelable sealing temperature range of about 35°C. In general, the sealants of the examples provided peelable sealing temperature ranges that cover from about 15°C to about 35°C. The sealant of the comparative example, by contrast, formed peelable seals over a sealing temperature range of about 15°C.

**Table 2. Seal Strength vs. Temperature**

| Seal Bar Temperature, °C | Seal Strength, N/15mm | | | | |
|---|---|---|---|---|---|
| | Ex 1 | Ex 2 | Ex 3 | Ex 4 | Comparative |
| 100 | | | | 1.14 | |
| 110 | 2.97 | 2.02 | 1.47 | 4.33 | |
| 120 | 3.29 | 12.26 | 6.5 | 8.1 | |
| 130 | 8.66 | 20.59 | 13.14 | 13.8 | 0.93 |
| 140 | 20.03 | 26.09 | 18.61 | 18.16 | 12.79 |
| 150 | 23.86 | | 23.46 | 23.6 | 21.58 |

No significant static charge buildup was observed for the sealants of Examples 1-4. After the films were rubbed ten times with a cotton cloth, a relatively small quantity of cigarette ash was attracted to the films by static electricity. In the Comparative Example, however, the static charge buildup typical of ionomer blend sealants was observed. After rubbing the film 10 times with a dry cotton cloth, a relatively large quantity of cigarette ash was attracted to the film.

### Example 5

Multilayer films (60µ) shown as follows were made in the following manner. First, a five-layer blown film was coextruded to make a three-layer film with the outer layer of LDPE at 20µ, an intermediate layer of DuPont Nucrel^{®} 0903 at a thickness of 20µ, and a sealant layer of 20µ thick made of the following products.
Sealant A: 93% Surlyn^{®} 8273 + 2% CN (CN denotes DuPont Conpol^{®} slip and antiblock concentrates) 20B + 5% CN 20S2.
Sealant B: 93% 04-480-74-4 (50% Nucrel^{®} 1202 + 45 % DuPont Bynel^{®} 2002 + 5% Fina 8573 polypropylene)+ 2% CN 20B + 5% CN 20S2.
Sealant C: 95% 04-480-74-4 + 5% DuPont Elvax^{®} 9619-1.
Sealant D: 95% 04-480-74-13 (90% Elvaloy^{®} AC3717 + 10% Fina 8573 PP) + 5% DuPont Elvax^{®} 9619-1.

Next, the blown films were adhesively laminated to a 12µ DuPont Mylar^{®} OPET (oriented polyethylene terephthalate), using Herberts (Germany) adhesive 1K-LF 190x3 at a coating weight of 1.5g/m² on a LABORCOMBI machine from Nordmeccanica Company, Germany, to make the laminated films: OPET/PE/NU/SEALANT where film A contained "sealant A, film B contained sealant B, film C contained sealant C, and film D contained sealant D as shown in Table 3.

**Table 3**

| | Gauge [µm] | EXTRUDER | | | MELT | | BARELS TEMPERATURE SETTINGS [°C] | | | | | | |
|---|---|---|---|---|---|---|---|---|---|---|---|---|---|
| Layer¹ | | RPM | 1[%] | Kg/hr | T[°C] | P [bar] | D.RA | Z1 | Z2 | Z3 | Z4 | MCF | BR1 |
| A | 10 | 45.0 | 30 | 17.6 | 201 | 113 | 29 | 179 | 189 | 199 | 200 | 199 | 200 |
| B | 10 | 45.0 | 31 | 17.6 | 199 | 159 | 30 | 179 | 189 | 199 | 200 | 200 | 199 |
| C | 10 | 40.8 | 34 | 17.8 | 198 | 123 | 30 | 179 | 190 | 199 | 200 | 199 | 199 |
| D | 10 | 42.3 | 34 | 18.0 | 200 | 130 | 29 | 179 | 189 | 199 | 200 | 200 | 199 |
| E | 20 | 75.5 | 41 | 35.0 | 203 | 122 | 30 | 170 | 180 | 190 | 200 | 200 | 200 |

| | | | | | | | | | | | | | |
|---|---|---|---|---|---|---|---|---|---|---|---|---|---|
| ¹ The structures for the layers were: A, LDPE2602; B, LDPE2602; C, Nucrel 0903; D, Nucrel 0903; and E, 04-480-74-4 + 2% CN 20B + 5% CN 20S2. | | | | | | | | | | | | | |

Pouches were made from films A, B, and D with these films on a commercial Bosch horizontal form-fill-seal packaging machine (Model SVE 2510-AR) at 60 pouches/minute. The vertical seals were sealed at 200°C and had a lock seal. The horizontal seals were made at temperatures between 112°C and 140°C (film A); 101°C and 160°C (film B); and 90°C and 115°C (film D). The seal time was 200ms and the dwell pressure was 0.3 MPa. The top, bottom and vertical seal samples were cut to 15 mm width while the middle top and middle bottom seal samples were cut to 6 mm width. The peel force needed to open up the seals sealed by different temperatures was measured and, the average taken of three to four strips per temperature, was recorded below. The test speed was 100 mm/min and peel angle was 180°C. For comparison, the fin seal area was measured separately at the top and bottom of the pouch. The fin seal area is defined as the seal region of the pouch where the vertical and horizontal seals meet, one at the top of the pouch and the other at the bottom of the pouch. In the text or tables, they are also referred to as "middle top" and "middle bottom". The fin seal area had higher seal pressure, but the same temperature and therefore showed a higher seal strength.

In the following tables, 4 strips each having 15 mm wide cut in machine direction were sealed on themselves with two bars heat sealer Kopp # 2428 for each temperature. The middle top and middle bottom were fin seals. Average maximal values for the applied force were taken into consideration for measuring peel strength.

All results (Bosch horizontal seal set temperature) were average of 3 measurements at each temperature indicated.

### Peel Force-film A

| | Bosch horizontal seal set temperature | | | | | | |
|---|---|---|---|---|---|---|---|
| Peel layer sealed or | 112°C | 116°C | 121°C | 126°C | 131°C | 136°C | 140°C |
| Bottom¹ | 1.01 | 2.37 | 1.55 | 2.99 | 5.44 | 2.99 | 5.04 |
| Top¹ | 1.39 | 2.03 | 4.10 | 2.94 | 5.11 | 3.17 | 4.95 |
| Middle Bottom² | 1.66 | 1.75 | 1.89 | 2.27 | 2.50 | 3.50 | 4.42 |
| Middle Top² | 2.08 | 2.40 | 2.46 | 2.53 | 3.27 | 5.86 | 7.33 |

| | | | | | | | |
|---|---|---|---|---|---|---|---|
| ¹ N/15 mm ² N/6 mm | | | | | | | |

### Peel Force-film B

| | Bosch horizontal seal set temperature | | | | | | | | |
|---|---|---|---|---|---|---|---|---|---|
| Peel layer sealed on | 101°C | 106°C | 111°C | 116°C | 121°C | 126°C | 132°C | 140°C | 160°C |
| Bottom¹ | 0.23 | 0.80 | 1.97 | 3.10 | 5.75 | 6.04 | 7.82 | 9.18 | 22.54 |
| Top¹ | 0.00 | 1.32 | 2.99 | 3.24 | 5.09 | 6.54 | 7.58 | 10.38 | 24.30 |
| Middle Bottom² | 1.93 | 3.70 | 3.90 | 5.12 | 5.64 | 6.14 | 7.63 | 9.74 | |
| Middle Top² | 2.65 | 3.65 | 4.25 | 5.21 | 6.19 | 5.83 | 7.06 | 8.85 | 9.92 |

| | | | | | | | | | |
|---|---|---|---|---|---|---|---|---|---|
| N/15 mm ² N/6 mm | | | | | | | | | |

### Peel Force-film D

| | Bosch horizontal seal set temperature | | | | | |
|---|---|---|---|---|---|---|
| Peel layer sealed on | 90°C | 95°C | 100°C | 105°C | 110°C | 115°C |
| Bottom¹ | 0.10 | 0.13 | 0.15 | 0.42 | 2.45 | 2.91 |
| Top¹ | 0.10 | 0.10 | 0.15 | 3.23 | 1.47 | 7.64 |
| Middle Bottom² | 1.96 | 2.89 | 3.89 | 4.17 | 4.92 | 5.17 |
| Middle Top² | 1.66 | 2.32 | 4.59 | 5.44 | 6.16 | 6.53 |

| | | | | | | |
|---|---|---|---|---|---|---|
| ¹N/15 mm ² N/6 mm | | | | | | |

## Claims

1. A composition consisting essentially of a thermoplastic polymer blend and optional additives selected from antioxidants, slip agents, antiblocking agents, antifogging agents and antistats,
wherein the thermoplastic polymer blend consists essentially of an ethylene copolymer which is not an ionomer and a propylene polymer, wherein the ethylene copolymer comprises (1) repeat units derived from ethylene and alkyl acrylate, acrylic acid, methacrylic acid, or combinations of two or more thereof, and optionally carbon monoxide or an epoxy-containing comonomer, (2) a metallocene-catalyzed ethylene polymer comprising repeat units derived from ethylene and a second α-olefin, or (3)
combinations of (1) and (2); and the propylene polymer comprises repeat units derived from propylene and optionally a comonomer, which is an α-olefin including ethylene, butene, or combinations thereof,
wherein the ethylene copolymer is present in the composition from about 70 wt% to about 95 wt% and the propylene polymer is present in the composition from about 5 wt% to about 30 wt%, wherein the additives are included in the composition in an amount of up to 10 wt%,
and wherein the composition forms a peelable seal when heated at a first temperature that Is within the range of 80 to 160°C; and the composition forms a permanent or lock up seal when heated at a second temperature that is within the range of 100 to 180°C; with the range of temperatures regarding the first temperature spanning at least about 15°C.

2. The composition of claim 1, wherein the ethylene copolymer Is present in the composition from about 85 wt% to about 95 wt%.

3. The composition of claim 2, wherein the ethylene copolymer is present in the composition from about 90 wt% to about 95 wt%.

4. The composition of claim 1, 2 or 3 wherein the ethylene copolymer comprises repeat units derived from ethylene and a comonomer which is methacrylic acid, acrylic acid, methyl acrylate, ethyl acrylate, butyl acrylate, or combinations of two or more thereof; and the propylene polymer preferably has a melt flow rate of ≥ 2. g/10 min.

5. The composition of claim 4 wherein the comonomer comprises methyl acrylate, butyl acrylate, methacrylic acid, both butyl acrylate and methacrylic acid, or combinations of two or more thereof.

6. A mufti-layer film comprising a sealant or sealing layer wherein the sealant or sealing layer comprises or is produced from a composition wherein the composition is as **characterized in** claim any of claims 1 to 5.

7. The film of claim 6 wherein the film further comprises, or Is produced from, oriented polyester or oriented polypropylene.

8. A package comprising or produced from a multilayer film wherein the package comprises a peelable seal within th e package and the film Is as **characterized in** claim 6 or 7.

9. A process comprising coextruding a polymer and a sealant to produce a multilayer film containing a layer of the sealant to produce a sealant-containing film; optionally applying the sealant-containing film to a second film of oriented polyester or oriented polypropylene to produce a second multilayer film wherein the multi-layer film or the second multilayer film comprises the composition as **characterized in** any of claims 1 to 5 and the film Is as **characterized in** claims 6 or 7.

10. The process of claim 9 further comprising (1) folding the multilayer film or the second multilayer film and sealing two sides of the film at the edges to produce a package having an opening thereby producing a seal and defining a sealed perimeter of a package with an opening, or superimposing two sheets of the multilayer film or the second multilayer film and sealing three sides at the edges of the multilayer film or the second multilayer film to produce a package having an opening thereby producing a seal and defining a sealed perimeter of a package with an opening, or superimposing the multilayer film or the second multilayer film with another film and sealing three sides at the edges of the multilayer film or the second multilayer film to produce a package having an opening thereby producing a seal and defining a sealed perimeter of a package with the opening; and (2) optionally sealing one ormore portions of the film internal to the perimeter of the package thereby producing one ormore peelable seals forming a boundary and dividing the package into separate compartments; 3) confining one ormore ingredients into one or more compartments and the ingredients includes solid, fluid, or gas; and (4) sealing the opening.

## Patentansprüche

1. Zusammensetzung, die im Wesentlichen aus einem thermoplastischen Polymergemisch und wahlfreien Zusätzen besteht, die unter Antioxidationsmitteln, Gleitmitteln, Antihaftmitteln, Klarsichtmitteln und Antistatikmitteln ausgewählt sind,
wobei das thermoplastische Polymergemisch im Wesentlichen aus einem Ethylen-Copolymer, das kein Ionomer ist, und einem Propylen-Polymer besteht, wobei das Ethylen-Copolymer aufweist: (1) Wiederholungseinheiten, die von Ethylen und Alkylacrylat, Acrylsäure, Methacrylsäure oder Kombinationen von zwei oder mehreren dieser Verbindungen und wahlweise Kohlenmonoxid oder einem epoxidhaltigen Comonomer abgeleitet sind, (2) ein Metallocen-katalysiertes Ethylen-Polymer mit Wiederholungseinheiten, die von Ethylen und einem zweiten α-Olefin abgeleitet sind, oder (3) Kombinationen von (1) und (2); und wobei das Propylen-Polymer Wiederholungseinheiten aufweist, die von Propylen und wahlweise einem Comonomer abgeleitet sind, das ein α-Olefin ist, das Ethylen, Butylen oder Kombinationen davon einschließt,
wobei das Ethylen-Copolymer in der Zusammensetzung in einem Anteil von etwa 70 Gew.-% bis etwa 95 Gew.-% anwesend ist und das Propylen-Polymer in der Zusammensetzung in einem Anteil von etwa 5 Gew.-% bis etwa 30 Gew.-% anwesend ist, wobei die Zusätze in der Zusammensetzung in einem Anteil bis zu 10 Gew.-% enthalten sind,
und wobei die Zusammensetzung eine abziehbare Dichtung bildet, wenn sie auf eine erste Temperatur erhitzt wird, die im Bereich von 80 bis 160°C liegt, und die Zusammensetzung eine permanente oder Sperrdichtung bildet, wenn sie auf eine zweite Temperatur erhitzt wird, die im Bereich von 100 bis 180°C liegt; wobei sich der Temperaturbereich bezüglich der ersten Temperatur über mindestens etwa 15°C erstreckt.

2. Zusammensetzung nach Anspruch 1, wobei das Ethylen-Copolymer in der Zusammensetzung in einem Anteil von etwa 85 Gew.-% bis etwa 95 Gew.-% anwesend ist.

3. Zusammensetzung nach Anspruch 2, wobei das Ethylen-Copolymer in der Zusammensetzung in einem Anteil von etwa 90 Gew.-% bis etwa 95 Gew.-% anwesend ist.

4. Zusammensetzung nach Anspruch 1, 2 oder 3, wobei das Ethylen-Copolymer Wiederholungseinheiten aufweist, die von Ethylen und einem Comonomer abgeleitet sind, das aus Methacrylsäure, Acrylsäure, Methylacrylat, Ethylacrylat, Butylacrylat oder Kombinationen von zwei oder mehreren dieser Komponenten besteht, und das Propylen-Polymer vorzugsweise einen MFI-Index ≥ 2 g/10 min aufweist.

5. Zusammensetzung nach Anspruch 4, wobei das Comonomer Methylacrylat, Butylacrylat, Methacrylsäure, sowohl Butylacrylat als auch Methacrylsäure, oder Kombinationen von zwei oder mehreren dieser Komponenten aufweist.

6. Mehrschichtiger Film, der ein Dichtungsmaterial oder eine Dichtungsschicht aufweist, wobei das Dichtungsmaterial oder die Dichtungsschicht eine Zusammensetzung aufweist oder daraus hergestellt ist, wobei die Zusammensetzung der Beschreibung in einem der Ansprüche 1 bis 5 entspricht.

7. Film nach Anspruch 6, wobei der Film ferner einen orientierten Polyester oder orientiertes Polypropylen aufweist oder daraus hergestellt ist.

8. Verpackung, die einen mehrschichtigen Film aufweist oder daraus hergestellt ist, wobei die Verpackung eine abziehbare Dichtung innerhalb der Verpackung aufweist und der Film der Beschreibung in Anspruch 6 oder 7 entspricht.

9. Verfahren, das aufweist: Koextrudieren eines Polymers und eines Dichtungsmaterials zur Herstellung eines mehrschichtigen Films, der eine Schicht aus dem Dichtungsmaterial enthält, um einen Dichtungsmaterial enthaltenden Film herzustellen; wahlweise Aufbringen des Dichtungsmaterial enthaltenden Films auf einen zweiten Film aus orientiertem Polyester oder orientiertem Polypropylen, um einen zweiten mehrschichtigen Film herzustellen, wobei der mehrschichtige Film oder der zweite mehrschichtige Film die Zusammensetzung nach einem der Ansprüche 1 bis 5 aufweist und der Film der Beschreibung in Anspruch 6 oder 7 entspricht.

10. Verfahren nach Anspruch 9, das ferner aufweist: (1) Falten des mehrschichtigen Films oder des zweiten mehrschichtigen Films und Abdichten von zwei Seiten des Films an den Kanten, um eine Verpackung mit einer Öffnung und dadurch eine Dichtung herzustellen und einen abgedichteten Umfang einer Verpackung mit einer Öffnung zu definieren, oder Übereinanderlegen von zwei Lagen des mehrschichtigen Films oder des zweiten mehrschichtigen Films und Abdichten von drei Seiten an den Kanten des mehrschichtigen Films oder des zweiten mehrschichtigen Films, um eine Verpackung mit einer Öffnung und dadurch eine Dichtung herzustellen und einen abgedichteten Umfang einer Verpackung mit einer Öffnung zu definieren, oder Übereinanderlegen des mehrschichtigen Films oder des zweiten mehrschichtigen Films und eines anderen Films und Abdichten von drei Seiten an den Kanten des mehrschichtigen Films oder des zweiten mehrschichtigen Films, um eine Verpackung mit einer Öffnung und dadurch eine Dichtung herzustellen und einen abgedichteten Umfang einer Verpackung mit der Öffnung zu definieren; und (2) wahlweise Abdichten eines oder mehrerer Abschnitte des Films auf der Innenseite des Umfangs der Verpackung, wodurch eine oder mehrere abziehbare Dichtungen hergestellt werden, die eine Begrenzung bilden und die Verpackung in getrennte Fächer unterteilen; (3) Einschließen eines oder mehrerer Bestandteile in ein oder mehrere Fächer, wobei zu den Bestandteilen Feststoff, Flüssigkeit oder Gas gehören; und (4) Abdichten der Öffnung.

## Revendications

1. Composition essentiellement constituée d'un mélange polymère thermoplastique et d'additifs optionnels choisis parmi les antioxydants, les agents glissants, les agents anti-adhérents, les agents anti-buée et les produits antistatiques,
dans laquelle le mélange polymère thermoplastique est essentiellement constitué d'un copolymère d'éthylène qui n'est pas un ionomère et d'un polymère de propylène, le copolymère d'éthylène comprenant (1) des motifs répétitifs dérivés de l'éthylène ainsi que d'un acrylate d'alkyle, d'acide acrylique, d'acide méthacrylique, ou de combinaisons d'au moins deux d'entre eux, et éventuellement de monoxyde de carbone ou d'un comonomère à fonction époxy, (2) un polymère d'éthylène obtenu par catalyse métallocène comprenant des motifs répétitifs dérivés de l'éthylène et d'une seconde α-oléfine, ou (3) des combinaisons de (1) et de (2); et le polymère de propylène comprenant des motifs répétitifs dérivés du propylène et éventuellement d'un comonomère, qui est une α-oléfine incluant l'éthylène, le butène, ou une de leurs combinaisons,
dans laquelle le copolymère d'éthylène est présent dans la composition à raison d'environ 70% en poids à environ 95% en poids et le polymère de propylène est présent dans la composition à raison d'environ 5% en poids à environ 30% en poids, où les additifs sont incorporés dans la composition en une quantité pouvant atteindre 10% en poids,
et dans laquelle la composition forme un opercule pelable lorsqu'on la chauffe à une première température qui se situe entre 80 et 160°C ; et la composition forme un opercule de verrouillage ou permanent lorsqu'on la chauffe à une seconde température qui se situe entre 100 et 180°C; la gamme des températures relative à la première température couvrant au moins environ 15°C.

2. Composition selon la revendication 1, dans laquelle le copolymère d'éthylène est présent dans la composition à raison d'environ 85% en poids à environ 95% en poids.

3. Composition selon la revendication 2, dans laquelle le copolymère d'éthylène est présent dans la composition à raison d'environ 90% en poids à environ 95% en poids.

4. Composition selon la revendication 1, 2 ou 3, dans laquelle le copolymère d'éthylène comprend des motifs répétitifs dérivés de l'éthylène et d'un comonomère qui est l'acide méthacrylique, l'acide acrylique, l'acrylate de méthyle, l'acrylate d'éthyle, l'acrylate de butyle, ou des combinaisons d'au moins deux d'entre eux; et le polymère de propylène a de préférence un indice de fluidité à chaud supérieur ou égal à 2 g/10 min.

5. Composition selon la revendication 4, dans laquelle le comonomère comprend l'acrylate de méthyle, l'acrylate de butyle, l'acide méthacrylique, à la fois l'acrylate de butyle et l'acide méthacrylique, ou des combinaisons d'au moins deux d'entre eux.

6. Film multicouche comprenant un agent ou une couche d'étanchéité dans lequel l'agent ou la couche d'étanchéité comprend ou est produit à partir d'une composition, ladite composition étant telle que caractérisée dans l'une quelconque des revendications 1 à 5.

7. Film selon la revendication 6, dans lequel le film comprend en outre ou est produit à partir d'un polyester orienté ou d'un polypropylène orienté.

8. Emballage comprenant ou produit à partir d'un film multicouche, dans lequel l'emballage comprend un opercule pelable à l'intérieur de l'emballage et le film est tel que caractérisé dans la revendication 6 ou 7.

9. Procédé comprenant la coextrusion d'un polymère et d'un agent d'étanchéité pour produire un film multicouche contenant une couche de l'agent d'étanchéité pour produire un film contenant un agent d'étanchéité; éventuellement, l'application du film contenant un agent d'étanchéité sur un second film de polyester orienté ou de polypropylène orienté pour produire un second film multicouche, dans lequel le film multicouche ou le second film multicouche comprend la composition telle que caractérisée dans l'une quelconque des revendications 1 à 5 et le film est tel que caractérisé dans les revendications 6 ou 7.

10. Procédé selon la revendication 9, comprenant en outre (1) le pliage du film multicouche ou du second film multicouche et le scellement de deux côtés du film au niveau des arêtes pour produire un emballage doté d'une ouverture, produisant ainsi un opercule et délimitant un périmètre scellé d'un emballage doté d'une ouverture, ou la superposition de deux feuillets du film multicouche ou du second film multicouche et le scellement de trois côtés au niveau des arêtes du film multicouche ou du second film multicouche pour produire un emballage doté d'une ouverture, produisant ainsi un opercule et délimitant un périmètre scellé d'un emballage doté d'une ouverture, ou la superposition du film multicouche ou du second film multicouche avec un autre film et le scellement de trois côtés au niveau des arêtes du film multicouche ou du second film multicouche pour produire un emballage doté d'une ouverture, produisant ainsi un opercule et délimitant un périmètre scellé d'un emballage doté d'une ouverture; et (2) éventuellement, le scellement d'une ou plusieurs parties du film à l'intérieur du périmètre de l'emballage, produisant ainsi un ou plusieurs opercules pelables formant une bordure limite et divisant l'emballage en compartiments séparés; (3) l'enfermement d'un ou plusieurs ingrédients dans un ou plusieurs compartiments, les ingrédients incluant solide, fluide, ou gaz; et (4) le scellement de l'ouverture.
